# EUROPÄISCHE PATENTANMELDUNG

(11) **EP 4 246 983 A2**
(43) Veröffentlichungstag der Anmeldung: **20.09.2023**
(21) Anmeldenummer: 23185982.8
(22) Anmeldetag: 28.01.2021
(51) Int. Cl.: H04N 21/4223

(54) **VERFAHREN ZU EINER ZUORDNUNG EINES URHEBERS EINER DIGITALEN MEDIENDATEI UND/ODER ZU EINER DISTRIBUTION DER DIGITALEN MEDIENDATEI, AUFNAHMEGERÄT UND ANZEIGEGERÄT**

(30) Priorität: 29.01.2020 DE 102020102161; 06.08.2020 DE 102020120828
(62) Teilanmeldung aus: 21704426.2
(71) Anmelder: ETO MAGNETIC GmbH, 78333 Stockach (DE)
(72) Erfinder: Bönisch, Benjamin, 78351 Bodman-Ludwigshafen (DE)
(74) Vertreter: Daub, Thomas

(57) **Zusammenfassung**

Die Erfindung geht aus von einem Verfahren zu einer Zuordnung zumindest eines Urhebers zu einer digitalen Mediendatei (24), mit zumindest einem Verfahrensschritt (18), in dem die digitale Mediendatei (24) mittels einer Aufzeichnungsvorrichtung (10) eines Aufnahmegeräts (12, 12'), insbesondere einer Frontkamera des Aufnahmegeräts (12, 12'), aufgezeichnet und mit Metadaten (14) versehen wird, wobei die Metadaten (14) zumindest eine Urheberinformation (16) umfassen, wobei die Urheberinformation (16) automatisch im Zeitraum der Aufzeichnung der digitalen Mediendatei (24) erstellt wird, wobei die Urheberinformation (16) als ein Benutzer-Identifikator (54) ausgebildet ist, und wobei in dem Verfahrensschritt (18) zumindest der Benutzer-Identifikator (54) durch eine Sicherheitseinrichtung (20) ermittelt und/oder überprüft wird, wobei die Sicherheitseinrichtung (20) eine Kamera (22) des Aufnahmegeräts (12, 12'), insbesondere eine Rückkamera des Aufnahmegeräts (12, 12'), umfasst, mittels welcher im Zeitraum der Aufzeichnung der digitalen Mediendatei (24) mittels der Aufzeichnungsvorrichtung (10) die Ermittlung und/oder Überprüfung des Benutzer-Identifikators (54) des die Aufzeichnung vornehmenden Benutzers durchgeführt wird.

Es wird vorgeschlagen, dass in dem Verfahrensschritt (18) eine digitale Mediendatei (24) aufgezeichnet wird, welche eine bildliche Darstellung (116) einer Person (114) umfasst, und dass in zumindest einem Autorisierungsschritt (108) eine Nutzungsrecht-Anfrage (124) an die in der bildlichen Darstellung (116) abgebildete Person (114) gesendet wird.

## Beschreibung

### Stand der Technik

Die Erfindung betrifft ein Verfahren zu einer Zuordnung zumindest eines Urhebers zu einer digitalen Mediendatei nach dem Oberbegriff des Anspruchs 1 und ein Aufnahmegerät nach Anspruch 13.

Es ist bereits ein Verfahren zu einer Zuordnung zumindest eines Urhebers zu einer digitalen Mediendatei, mit zumindest einem Verfahrensschritt, in dem die digitale Mediendatei mittels einer Aufzeichnungsvorrichtung des Aufnahmegeräts aufgezeichnet und mit Metadaten versehen wird, wobei die Metadaten zumindest eine Urheberinformation umfassen, wobei die Urheberinformation als ein Benutzer-Identifikator ausgebildet ist, wobei die Urheberinformation automatisch im Zeitraum der Aufzeichnung der digitalen Mediendatei erstellt wird, und wobei in dem Verfahrensschritt zumindest der Benutzer-Identifikator durch eine Sicherheitseinrichtung ermittelt und/oder überprüft wird, vorgeschlagen worden.

Die Aufgabe der Erfindung besteht insbesondere darin, ein Verfahren mit vorteilhaften Eigenschaften hinsichtlich einer, insbesondere zumindest im Wesentlichen fälschungssicheren, Urheberidentifizierung bereitzustellen. Die Aufgabe wird erfindungsgemäß durch die Merkmale der Patentansprüche 1 und 13 gelöst, während vorteilhafte Ausgestaltungen und Weiterbildungen der Erfindung den Unteransprüchen entnommen werden können.

### Vorteile der Erfindung

Die Erfindung geht aus von einem Verfahren zu einer, insbesondere zumindest im Wesentlichen fälschungssicheren, Zuordnung zumindest eines Urhebers zu einer digitalen Mediendatei, mit zumindest einem Verfahrensschritt, in dem die digitale Mediendatei mittels einer Aufzeichnungsvorrichtung des Aufnahmegeräts, insbesondere einer Frontkamera des Aufnahmegeräts, aufgezeichnet und mit Metadaten versehen wird, wobei die Metadaten zumindest eine Urheberinformation umfassen, wobei die Urheberinformation als ein Benutzer-Identifikator ausgebildet ist, wobei die Urheberinformation automatisch im Zeitraum der Aufzeichnung der digitalen Mediendatei, insbesondere von dem Aufnahmegerät, vorzugsweise von einer Anwendungssoftware des Aufnahmegeräts, erstellt wird, und wobei in dem Verfahrensschritt zumindest der Benutzer-Identifikator, insbesondere zumindest eine Benutzer-Identität, durch eine Sicherheitseinrichtung ermittelt und/oder überprüft wird, wobei die Sicherheitseinrichtung eine Kamera des Aufnahmegeräts, insbesondere eine Rückkamera des Aufnahmegeräts, umfasst, mittels welcher im Zeitraum der Aufzeichnung der digitalen Mediendatei mittels der Aufzeichnungsvorrichtung die Ermittlung und/oder Überprüfung des Benutzer-Identifikators, insbesondere der Benutzer-Identität, des die Aufzeichnung vornehmenden Benutzers durchgeführt wird. Dadurch kann insbesondere eine vorteilhafte Urheberidentifizierung ermöglicht werden. Vorteilhaft kann sichergestellt werden, dass der die Aufnahme der digitalen Mediendatei auslösende Benutzer auch als Urheber der digitalen Mediendatei festgelegt wird. Zudem kann vorteilhaft eine besonders einfache und benutzerfreundliche automatisierte Benutzeridentifikation eines eine digitale Mediendatei erstellenden Benutzers ermöglicht werden. Außerdem kann vorteilhaft ein besonders einfaches und benutzerfreundliches automatisiertes Erstellen einer Urheberinformationen enthaltenden digitalen Mediendatei ermöglicht werden. Vorteilhaft kann ein besonders einfacher, insbesondere zeit- und kostensparender, Urhebernachweis für eine digitale Mediendatei ermöglicht werden. Vorteilhaft kann ein hoher Grad an Informationssicherheit erreicht werden.

Unter einer "digitalen Mediendatei" soll insbesondere eine akustische und/oder visuelle digitale Mediendatei, beispielsweise eine Tondatei oder bevorzugt eine Bild- oder Videodatei, verstanden werden. Besonders bevorzugt ist die digitale Mediendatei als eine Digitalfotographie ausgebildet. Unter einer "Aufzeichnungsvorrichtung" soll insbesondere ein Rekorder, beispielsweise ein Ton- und/oder Bildrekorder, vorzugsweise ein Mikrophon und bevorzugt eine Kamera, insbesondere Digitalkamera, verstanden werden. Die Aufzeichnungsvorrichtung ist insbesondere in das Aufnahmegerät integriert, beispielsweise als eine Smartphone-Kamera oder als eine Kameralinse einer Digitalkamera. Unter "Metadaten" sollen insbesondere strukturierte Daten verstanden werden, welche Informationen über Merkmale der jeweiligen digitalen Mediendatei enthalten. Vorzugsweise sind die Metadaten in die digitale Mediendatei integriert und/oder untrennbar mit der digitalen Mediendatei verbunden.

Unter der Wendung "im Zeitraum der Aufzeichnung" soll insbesondere ein zeitlicher Nahbereich der Aufzeichnung der digitalen Mediendatei, insbesondere der Aktivierung und/oder der Deaktivierung der Aufzeichnung, und/oder des Aufzeichnungszeitraums der digitalen Mediendatei und/oder ein exakter Zeitpunkt der Aufzeichnung oder ein exakter Aufzeichnungszeitraum verstanden werden. Der zeitliche Nahbereich erstreckt sich insbesondere über wenige Sekunden (z.B. höchstens 10 s, höchstens 6 s, höchstens 3 s oder höchstens 1 s) oder bevorzugt über wenige Sekundenbruchteile (z.B. höchstens 1/10 s, höchstens 1/100 s oder höchstens 1/1000 s). Vorzugsweise erstreckt sich der zeitliche Nahbereich über einen Zeitraum, welcher höchstens zehn Sekunden, vorteilhaft höchstens eine Sekunde, bevorzugt höchstens eine Zehntelsekunde und besonders bevorzugt höchstens eine Hundertstelsekunde vor der Aufzeichnung und/oder vor dem Aufzeichnungszeitraum beginnt und/oder höchstens zehn Sekunden, vorteilhaft höchstens eine Sekunde, bevorzugt höchstens eine Zehntelsekunde und besonders bevorzugt höchstens eine Hundertstelsekunde nach der Aufzeichnung und/oder nach dem Aufzeichnungszeitraum endet. Es ist jedoch auch denkbar, dass sich der Aufzeichnungszeitraum über eine durch einen Benutzer einstellbare Zeitspanne und/oder über eine Zeitspanne, während der Benutzer durch die Sicherheitseinrichtung zuverlässig identifizierbar ist, beispielsweise indem eine Stimme des Benutzers wiederkehrend erkannt wird oder indem das Gesicht des Benutzers durchgehend im Blickfeld einer Kamera des Aufnahmegeräts ist, erstreckt.

Unter einem "Benutzer-Identifikator" soll insbesondere ein mit einer Identität des Benutzers verknüpftes Merkmal verstanden werden, welches vorzugsweise zu einer eindeutigen Identifizierung des Benutzers vorgesehen ist. Der Benutzer-Identifikator kann beispielsweise als eine Benutzerkennung, insbesondere eine auf einer Distributed Ledger Technologie (DLT) basierende Benutzerkennung, insbesondere eine auf einer DLT-Technologie mit einer directed acyclic graphs (DAG)-Architektur, vorzugsweise einer DLT-Technologie mit einer transaction-based directed acyclic graphs (TDAG)-Architektur, basierende Benutzerkennung, beispielsweise eine IOTA^{™}-ID, als ein Name, als ein Benutzercode, als ein biometrisches Merkmal oder dergleichen ausgebildet sein. Insbesondere wird der Benutzer-Identifikator als Urheberinformation automatisch im Zeitraum der Aufzeichnung der digitalen Mediendatei, insbesondere von dem Aufnahmegerät, vorzugsweise von einer Anwendungssoftware (App) des Aufnahmegeräts, zu den Metadaten der aufgezeichneten digitalen Mediendatei hinzugefügt. Vorzugsweise ist der Benutzer-Identifikator in dem Aufnahmegerät und/oder in der App des Aufnahmegeräts hinterlegt. Alternativ kann der Benutzer-Identifikator auch auf einem Server, beispielsweise einer Cloud, hinterlegt sein, welcher von dem Aufnahmegerät und/oder von der App des Aufnahmegeräts, insbesondere nach einer Ermittlung und/oder Überprüfung der Sicherheitseinrichtung, abgefragt werden kann. Insbesondere ist die Sicherheitseinrichtung dazu vorgesehen, zumindest ein eindeutig einem Benutzer zuordenbares Sicherheitsmerkmal des Benutzers zu sensieren und/oder ermitteln. Insbesondere ist die Sicherheitseinrichtung, insbesondere in Kombination mit der App, dazu vorgesehen, zumindest ein eindeutig einem Benutzer zuordenbares Sicherheitsmerkmal des Benutzers zu überprüfen, beispielsweise durch einen Abgleich des Sicherheitsmerkmals mit einer internen Datenbank der App oder mit einer externen durch die App abfragbaren Datenbank. Insbesondere ist die Sicherheitseinrichtung dazu vorgesehen, durch die Überprüfung zumindest eines Sicherheitsmerkmals eine Zuordnung einer aufgezeichneten digitalen Mediendatei zu einem identifizierten Benutzer, insbesondere einem Benutzer-Identifikator, vorzugsweise durch die App der Aufzeichnungsvorrichtung, zu erlauben. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass von der Sicherheitseinrichtung zumindest eine Gesichtserkennung und/oder eine Gesichtsmerkmalerkennung zur Ermittlung und/oder Überprüfung des Benutzer-Identifikators, insbesondere der Benutzer-Identität, des die Aufzeichnung vornehmenden Benutzers durchgeführt wird. Dadurch kann insbesondere eine vorteilhafte Urheberidentifizierung ermöglicht werden. Insbesondere kann vorteilhaft eine hohe Fälschungssicherheit erreicht werden. Vorteilhaft kann eine besonders zuverlässige Urheberidentifizierung ermöglicht werden. Außerdem kann vorteilhaft eine besonders benutzerfreundliche und vorzugsweise für den Benutzer bedienungsfreie Identifizierung des Benutzers ermöglicht werden. Insbesondere wird die Gesichtserkennung und/oder die Gesichtsmerkmalerkennung anhand von Bildern vorgenommen, welche von der Kamera, insbesondere während der Aufzeichnung der digitalen Mediendatei durch die Aufzeichnungsvorrichtung, aufgezeichnet werden. Beispielsweise wird bei einer Aufzeichnung eines Bilds oder eines Videos von der Frontkamera eines Smartphones parallel von der Rückkamera des Smartphones eine Gesichtserkennung des Urhebers des Bilds oder des Videos durchgeführt, wobei die durch die Gesichtserkennung ermittelte Benutzer-Identität oder der durch die Gesichtserkennung ermittelte Benutzer-Identifikator als Urheberinformation in den Metadaten des Bilds oder des Videos abgespeichert wird. Insbesondere ist der die Aufzeichnung vornehmende Benutzer der Urheber der digitalen Mediendatei. Insbesondere ist vorstellbar, dass die durch die Sicherheitseinrichtung durchgeführte Gesichtserkennung und/oder Gesichtsmerkmalerkennung durch die Face-ID^{®}-Technik der Firma Apple (Cupertino, USA) durchgeführt wird. Insbesondere ist denkbar, dass die Sicherheitseinrichtung mehr als eine Kamera des Aufnahmegeräts umfasst, beispielsweise zumindest eine TrueDepth^{®}-Kamera, wie sie in Geräten der Firma Apple (Cupertino, USA) verbaut ist, eine 3D-Kamera und/oder eine Infrarotkamera, insbesondere in Kombination mit einem Punktprojektor, und/oder einem Infrarotleuchter, vorzugsweise zur Durchführung einer Face-ID^{®}-Gesichtserkennung und/oder einer Face-ID^{®}-Gesichtsmerkmalerkennung.

Zudem wird vorgeschlagen, dass die Aufzeichnungsvorrichtung als die Frontkamera des Aufnahmegeräts ausgebildet ist, wobei ein Blickfeld der Frontkamera und ein Blickfeld der, insbesondere als Rückkamera des Aufnahmegeräts ausgebildeten, Kamera in zumindest im Wesentlichen gegenläufige Richtungen ausgerichtet sind oder ausrichtbar sind. Dadurch kann insbesondere eine vorteilhafte Urheberidentifizierung ermöglicht werden. Vorteilhaft kann eine besonders benutzerfreundliche und vorzugsweise für den Benutzer bedienungsfreie Identifizierung des Benutzers ermöglicht werden. Unter "im Wesentlichen gegenläufig" soll hier insbesondere eine Ausrichtung einer Richtung relativ zu einer um 180° gegenläufigen Bezugsrichtung verstanden werden, wobei die Richtung gegenüber der um 180° gegenläufigen Bezugsrichtung eine Abweichung insbesondere kleiner als 8°, vorteilhaft kleiner als 5° und besonders vorteilhaft kleiner als 2° aufweist.

Wenn der Benutzer-Identifikator pseudonymisiert oder de-identifiziert ist/wird, kann vorteilhaft ein hoher Grad an Informationssicherheit erreicht werden. Insbesondere ist denkbar, dass eine Zuordnung des Benutzer-Identifikators zu einer Benutzer-Identität, d.h. insbesondere einer Re-Identifizierung oder eine De-Pseudonymisierung von der lokalen App, von einem zentralen Server, welcher beispielsweise von einem Betreiber der App verwaltet wird, oder von einer externen Institution, beispielsweise der IOTA^{™}-Stiftung, durchgeführt wird. Insbesondere ist der Benutzer-Identifikator, die Benutzer-Identität und/oder die Zuordnung von Benutzer-Identifikator und Benutzer-Identität durch die DLT-Technologie verschlüsselt. Es ist denkbar, dass der Benutzer-Identifikator über ein bekanntes Know-Your-Customer-Verfahren, wie beispielsweise einem Post-Ident-Verfahren oder einem Video-Ident-Verfahren, sicher einer Benutzer-Identität zugeordnet wird. Dadurch kann vorteilhaft eine Fälschungssicherheit erhöht werden.

Weiterhin wird vorgeschlagen, dass die Metadaten zumindest eine weitere Urheberinformation umfassen, welche als ein Blockchain-Zeitstempel oder als ein Digital Ledger Technology (DLT)-Zeitstempel, insbesondere ein DAG-Zeitstempel, vorzugsweise ein TDAG-Zeitstempel, ausgebildet ist und welche automatisch im Zeitraum der Aufzeichnung der digitalen Mediendatei erstellt wird, vorzugsweise zu den Metadaten der aufgezeichneten digitalen Mediendatei hinzugefügt wird. Dadurch kann insbesondere eine weiter verbesserte Urheberidentifizierung ermöglicht werden. Vorteilhaft kann, insbesondere auch unter Verwendung der Blockchain-Technologie oder der DLT-Technologie, insbesondere mit der DAG-Architektur, vorzugsweise mit der TDAG-Architektur, eine Fälschungssicherheit weiter erhöht werden. Insbesondere wird der Blockchain-Zeitstempel oder der DLT-Zeitstempel von der App oder von dem Aufnahmegerät automatisch zum Zeitpunkt der Aufzeichnung der digitalen Mediendatei erstellt und vorzugsweise zu den Metadaten der digitalen Mediendatei hinzugefügt. Insbesondere basiert der Blockchain-Zeitstempel oder der DLT-Zeitstempel auf einer internen Zeit des Aufnahmegeräts oder auf einer zu dem Zeitpunkt der Aufzeichnung der Mediendatei aus dem Internet abgerufenen synchronisierten Zeit. Insbesondere wird die interne Zeit des Aufnahmegeräts regelmäßig und/oder bei vorhandener Internetkonnektivität des Aufnahmegeräts synchronisiert.

Des Weiteren wird vorgeschlagen, dass die Metadaten zumindest eine weitere Urheberinformation umfassen, welche als ein Anwendungssoftware-Identifikator ausgebildet ist und welche automatisch im Zeitraum der Aufzeichnung der digitalen Mediendatei erstellt wird, vorzugsweise zu den Metadaten der aufgezeichneten digitalen Mediendatei hinzugefügt wird. Dadurch kann insbesondere eine weiter verbesserte Urheberidentifizierung ermöglicht werden. Vorteilhaft kann eine Fälschungssicherheit weiter erhöht werden. Insbesondere ist denkbar, dass die Anwendungssoftware mit dem, vorzugsweise zertifikatsbasierten, Anwendungssoftware-Identifikator, beispielsweise einer IOTA^{™}-ID, versehen wird, welche vorzugsweise zu den Metadaten jeder digitalen Mediendatei, insbesondere bei deren Aufzeichnung, hinzugefügt wird.

Zusätzlich wird vorgeschlagen, dass die Metadaten zumindest eine weitere Urheberinformation umfassen, welche als ein Hardware-Identifikator ausgebildet ist und welche automatisch im Zeitraum der Aufzeichnung der digitalen Mediendatei erstellt wird, vorzugsweise zu den Metadaten der aufgezeichneten digitalen Mediendatei hinzugefügt wird. Dadurch kann insbesondere eine weiter verbesserte Urheberidentifizierung ermöglicht werden. Vorteilhaft kann eine Fälschungssicherheit weiter erhöht werden. Insbesondere ist denkbar, dass das Aufnahmegerät mit dem, vorzugsweise zertifikatsbasierten, Hardware-Identifikator, beispielsweise einer IOTA^{™}-ID, versehen wird, welche vorzugsweise zu den Metadaten jeder digitalen Mediendatei, welche mit der Hardware, d.h. insbesondere dem Aufnahmegerät, aufgezeichnet wird, insbesondere bei der Aufzeichnung der digitalen Mediendatei, hinzugefügt wird.

Außerdem wird vorgeschlagen, dass die Metadaten zumindest eine weitere Urheberinformation umfassen, welche als ein Aufnahmeort-Identifikator ausgebildet ist und welche automatisch im Zeitraum der Aufzeichnung der digitalen Mediendatei erstellt wird, vorzugsweise zu den Metadaten der aufgezeichneten digitalen Mediendatei hinzugefügt wird. Dadurch kann insbesondere eine weiter verbesserte Urheberidentifizierung ermöglicht werden. Vorteilhaft kann eine Fälschungssicherheit weiter erhöht werden. Insbesondere umfasst der Aufnahmeort-Identifikator Ortskoordinaten des Aufnahmeorts, beispielsweise GPS-Koordinaten. Insbesondere werden die Ortskoordinaten von dem Aufnahmegerät, insbesondere von einer Navigationsvorrichtung des Aufnahmegeräts, im Zeitraum der Aufzeichnung ermittelt und an die App übertragen und/oder zu dem Aufnahmeort-Identifikator hinzugefügt. Insbesondere kann der Aufnahmeort-Identifikator alternativ oder zusätzlich Sensordaten eines Umgebungsbedingungen-Sensors, beispielsweise eines Temperatursensors, eines Feuchtigkeitssensors, eines Luftdrucksensors, eines Helligkeitssensors oder dergleichen umfassen.

Wenn außerdem die Urheberinformation, insbesondere der Blockchain-Zeitstempel, der DLT-Zeitstempel, der pseudonymisierte oder de-identifizierte Benutzer-Identifikator, die wahre Benutzer-Identität, der Anwendungssoftware-Identifikator, der Hardware-Identifikator und/oder der Aufnahmeort-Identifikator, vorzugsweise die Metadaten, mittels Blockchain-Technologie oder mittels DLT-Technologie (z.B. mit einer TDAG-Architektur wie IOTA^{™}) registriert, verschlüsselt und/oder gesichert wird, kann eine besonders hohe Fälschungssicherheit erreicht werden. Insbesondere sind die Metadaten und/oder die Urheberinformationen vorteilhaft untrennbar mit der digitalen Mediendatei verbunden. Insbesondere wird die Urheberinformation von der App und/oder von dem Aufnahmegerät mittels Blockchain-Technologie oder mittels DLT-Technologie (z.B. IOTA^{™}) verschlüsselt und/oder gesichert. Unter einer "DLT-Technologie" soll insbesondere eine DLT-Technologie mit einer directed acyclic graphs (DAG)-Architektur, vorzugsweise mit einer transaction-based directed acyclic graphs (DAG)-Architektur, verstanden werden.

Wenn zudem die digitale Mediendatei, insbesondere zusammen mit den Metadaten, mittels Blockchain-Technologie oder mittels DLT-Technologie, insbesondere mittels einer DLT-Technologie mit einer DAG-Architektur, vorzugsweise mittels einer DLT-Technologie mit einer TDAG-Architektur, registriert, verschlüsselt und/oder gesichert wird, kann eine besonders hohe Fälschungssicherheit erreicht werden. Vorteilhaft kann sichergestellt werden, dass die digitale Mediendatei nicht unautorisiert verwendet werden kann. Vorteilhaft kann sichergestellt werden, dass die digitale Mediendatei nicht unabhängig von den Metadaten geöffnet oder verteilt werden kann. Vorteilhaft kann eine unautorisierte Trennung der digitalen Mediendatei und der Urheberinformation(en) verhindert werden. Vorteilhaft kann eine unverfälscht nachvollziehbare Zuordnung der digitalen Mediendatei zu einem Urheber erreicht werden.

Ferner wird vorgeschlagen, dass die Sicherheitseinrichtung, insbesondere zusätzlich, einen Fingerabdruckscanner umfasst, von dem im Zeitraum der Aufzeichnung der digitalen Mediendatei zur Ermittlung und/oder Überprüfung des Benutzer-Identifikators, insbesondere der Benutzer-Identität, des die Aufzeichnung vornehmenden Benutzers zusätzlich ein Fingerabdruck des Benutzers erfasst und/oder analysiert wird. Dadurch kann vorteilhaft eine Sicherheit, insbesondere eine Fälschungssicherheit, weiter erhöht werden. Vorteilhaft kann sichergestellt werden, dass der die Aufnahme der digitalen Mediendatei auslösende Benutzer auch als Urheber der digitalen Mediendatei festgelegt wird. Vorteilhaft kann, insbesondere in Kombination mit den weiteren Methoden zur Benutzeridentifizierung der Sicherheitseinrichtung (z.B. eine Benutzeridentifizierung mittels der vorgenannten Face-ID^{®}-Technik der Firma Apple), ein mehrstufiges Sicherheitsverfahren ermöglicht werden. Insbesondere ist der Fingerabdruckscanner in das Aufnahmegerät integriert. Beispielsweise ist denkbar, dass der Fingerabdruck bei einem Auslösen eines die Aufzeichnung der digitalen Mediendatei startenden Auslösers des Aufnahmegeräts erfasst wird. Insbesondere ist denkbar, dass der Fingerabdruck direkt als Urheberinformation in der Metadatei abgespeichert wird oder dass der Fingerabdruck lediglich zu einer zusätzlichen lokalen Verifizierung des Benutzer-Identifikators verwendet wird und nur der ermittelte Benutzer-Identifikator in der Metadatei abgespeichert wird.

Zudem wird vorgeschlagen, dass die Sicherheitseinrichtung, insbesondere zusätzlich, einen Irisscanner umfasst, von dem im Zeitraum der Aufzeichnung der digitalen Mediendatei zur Ermittlung und/oder Überprüfung des Benutzer-Identifikators, insbesondere der Benutzer-Identität, des die Aufzeichnung vornehmenden Benutzers zusätzlich ein charakteristisches Irismuster des Benutzers erfasst und/oder analysiert wird. Dadurch kann vorteilhaft eine Sicherheit, insbesondere eine Fälschungssicherheit, weiter erhöht werden. Vorteilhaft kann sichergestellt werden, dass der die Aufnahme der digitalen Mediendatei auslösende Benutzer auch als Urheber der digitalen Mediendatei festgelegt wird. Vorteilhaft kann, insbesondere in Kombination mit den weiteren Methoden zu Benutzeridentifizierung der Sicherheitseinrichtung, ein mehrstufiges Sicherheitsverfahren ermöglicht werden. Insbesondere ist der Irisscanner in das Aufnahmegerät integriert. Beispielsweise ist denkbar, dass das Irismuster bei einem Blick durch einen Sucher des Aufnahmegeräts, insbesondere während einer Aufzeichnung der digitalen Mediendatei, erfasst wird. Insbesondere ist denkbar, dass das Irismuster direkt als Urheberinformation in der Metadatei abgespeichert wird oder dass das Irismuster lediglich zu einer zusätzlichen lokalen Verifizierung des Benutzer-Identifikators verwendet wird und nur der ermittelte Benutzer-Identifikator in der Metadatei abgespeichert wird.

Wenn der Irisscanner in den Sucher des Aufnahmegeräts integriert ist, kann vorteilhaft eine besonders einfache und/oder intuitive Iriserkennung ermöglicht werden. Dadurch kann vorteilhaft eine hohe Benutzerfreundlichkeit erreicht werden.

Des Weiteren wird vorgeschlagen, dass die Sicherheitseinrichtung ein Mikrofon umfasst, von dem im Zeitraum der Aufzeichnung der digitalen Mediendatei zur Ermittlung und/oder Überprüfung des Benutzer-Identifikators, insbesondere der Benutzer-Identität, des die Aufzeichnung vornehmenden Benutzers zusätzlich eine Stimmcharakteristik des Benutzers erfasst und/oder analysiert wird. Dadurch kann vorteilhaft eine Sicherheit, insbesondere eine Fälschungssicherheit, weiter erhöht werden. Vorteilhaft kann sichergestellt werden, dass der die Aufnahme der digitalen Mediendatei auslösende Benutzer auch als Urheber der digitalen Mediendatei festgelegt wird. Vorteilhaft kann, insbesondere in Kombination mit den weiteren Methoden zu Benutzeridentifizierung der Sicherheitseinrichtung, ein mehrstufiges Sicherheitsverfahren ermöglicht werden. Insbesondere ist das Mikrofon in das Aufnahmegerät integriert. Beispielsweise ist denkbar, dass bei einer Erkennung des Benutzers anhand der Stimmcharakteristik innerhalb von vordefinierbaren, insbesondere kurzen (einige Sekunden oder Minuten), wiederkehrenden Zeitabständen eine Freischaltung des Aufnahmegeräts für einen bestimmte Benutzer-Identifikator aufrechterhalten wird und insbesondere automatisch allen während der Freischaltung aufgezeichneten digitalen Mediendateien derselbe Benutzer-Identifikator zugeordnet wird, vorzugsweise ohne eine erneute Benutzeridentifikation bei jeder nacheinander erstellten digitalen Mediendatei zu erfordern. Dadurch kann vorteilhaft eine Benutzerfreundlichkeit weiter erhöht werden.

Außerdem wird vorgeschlagen, dass in dem Verfahrensschritt eine digitale Mediendatei aufgezeichnet wird, welche eine bildliche Darstellung einer Person, welche insbesondere eine Identifizierung der Person erlaubt, umfasst, wobei in zumindest einem, insbesondere zeitlich auf den Verfahrensschritt folgenden, Autorisierungsschritt, vorzugsweise von dem Aufnahmegerät, eine Nutzungsrecht-Anfrage an die in der bildlichen Darstellung abgebildete Person gesendet wird. Dadurch kann vorteilhaft auf besonders einfache und/oder direkte Weise (vor Ort) eine Nutzungsvereinbarung zwischen dem die Aufzeichnung vornehmenden Benutzer und der abgebildeten Person getroffen werden. Dadurch kann vorteilhaft eine aufwändige Rechteverwertung, insbesondere mittels einer zwischengeschalteten Distributionsplattform, entfallen. Vorteilhaft kann ein besonders einfaches, Zeit, Kosten und/oder Arbeitsaufwand sparendes Rechtemanagement ermöglicht werden. Insbesondere umfasst der Autorisierungsschritt eine elektronische Übermittlung der Nutzungsrecht-Anfrage von einem Gerät, insbesondere von dem Aufnahmegerät des die Aufzeichnung vornehmenden Benutzers und/oder von einem mit dem Aufnahmegerät des die Aufzeichnung vornehmenden Benutzers über eine Schnittstelle, wie z.B. BLE, USB, etc., verbundenen weiteren Gerät (z.B. einem Smartphone oder Tablet, das mit einem als eine externe Kamera ausgebildeten Aufnahmegerät verbunden ist) zu einem Gerät, insbesondere einem Anzeigegerät der abgebildeten Person, wie einem Smartphone, vorzugsweise in Form einer elektronischen Nachricht. Insbesondere umfasst die Nutzungsrecht-Anfrage eine Ja/Nein-Abfrage zur Erteilung des Nutzungsrechts an der digitalen Mediendatei. Alternativ oder zusätzlich kann die Nutzungsrecht-Anfrage ein monetäres Angebot für die Erteilung des Nutzungsrechts umfassen. Alternativ oder zusätzlich kann die Nutzungsrecht-Anfrage einen Vorschlag für eine Nutzungsrecht-Einschränkung (z.B. eine Gewährung eines Nutzungsrechts, das zeitlich begrenzt oder auf eine bestimmte Verwendung wie eine spezifische Werbekampagne o.ä. begrenzt ist) umfassen. Alternativ oder zusätzlich umfasst die Nutzungsrecht-Anfrage eine Eingabemöglichkeit für den Empfänger der Nutzungsrecht-Anfrage zur Eingabe eines Preisvorschlags für eine Erteilung des Nutzungsrechts oder zur Eingabe einer zeitlichen Begrenzung der Erteilung des Nutzungsrechts. Vorteilhaft wird in dem Verfahrensschritt bereits der Benutzer-Identifikator, insbesondere die Benutzer-Identität, des die Aufzeichnung vornehmenden Benutzers ermittelt, so dass vorteilhaft die das Nutzungsrecht anfragende Person und/oder die Person, der das Nutzungsrecht nach Akzeptanz der Nutzungsrecht-Anfrage erteilt wird, bereits zweifelsfrei identifiziert ist und/oder in die Nutzungsrechtsvereinbarung übernommen werden kann.

Wenn in zumindest einem, insbesondere zwischen dem Verfahrensschritt und dem Autorisierungsschritt liegenden, Analyseschritt die in dem Verfahrensschritt aufgezeichnete digitale Mediendatei auf Abbildungen von Personen hin überprüft wird, kann vorteilhaft ein hoher Benutzerkomfort erreicht werden. Vorteilhaft kann eine Erstellung und/oder Übermittlung der Nutzungsrecht-Anfrage vereinfacht und/oder zumindest teilautomatisiert werden. Insbesondere führt das Aufnahmegerät eine rechnerbasierte Bilderkennungsroutine aus, welche dazu vorgesehen ist, zumindest Darstellungen von Personen, vorzugsweise Identitäten von Personen, zu erkennen.

Wenn zudem bei einer Erkennung einer Abbildung einer Person in dem Analyseschritt eine Aufforderung zur Durchführung des Autorisierungsschritts ausgegeben wird, kann vorteilhaft eine besonders hohe Benutzerfreundlichkeit geschaffen werden. Vorteilhaft kann beispielsweise, insbesondere basierend auf dem Ergebnis des Analyseschritts, eine automatisierte Abfrage, ob eine Nutzungsrecht-Anfrage erstellt und/oder verschickt werden soll, erfolgen. Beispielsweise ist eine Abfrage durch das Aufnahmegerät denkbar, in welcher das Aufnahmegerät abfragt, ob es sich bei einer in dem Analyseschritt erkannten Person auf einer digitalen Mediendatei um eine öffentliche Person (Personen der Zeitgeschichte oder Personen des öffentlichen Lebens, z.B. Politiker, Schauspieler, etc.) oder um eine nicht öffentlich bekannte Person handelt.

Des Weiteren wird vorgeschlagen, dass in dem Autorisierungsschritt die digitale Mediendatei an ein Anzeigegerät der abgebildeten Person übermittelt wird. Dadurch kann vorteilhaft ein besonders hoher Bedienkomfort erreicht werden. Zudem kann vorteilhaft eine unmissverständliche Festlegung der das Nutzungsrecht betreffenden digitalen Mediendatei getroffen werden. Zudem kann vorteilhaft eine Entscheidung der abgebildeten Person hinsichtlich der Erteilung oder Ablehnung des Nutzungsrechts erleichtert und/oder beschleunigt werden. Insbesondere wird die betreffende digitale Mediendatei zusammen mit der Nutzungsrecht-Anfrage übermittelt. Insbesondere erfolgt eine Übermittlung der digitalen Mediendatei und/oder der Nutzungsrecht-Anfrage zwischen dem die Aufzeichnung vornehmenden Benutzer und der abgebildeten Person drahtlos und/oder funktechnisch. Alternativ ist jedoch selbstverständlich auch eine kabelgebundene Übertragung denkbar.

Wenn vorteilhaft ein Nutzungsrecht an der die bildliche Darstellung der Person umfassenden digitalen Mediendatei durch die abgebildete Person im Rahmen des Autorisierungsschritts zeitlich begrenzbar ist, kann vorteilhaft eine erhöhte Kontrolle der Person über das Recht an ihrem eigenen Bild ermöglicht werden. Insbesondere ist denkbar, dass die Nutzungsrecht-Anfrage eine Antwortoption enthält, in welcher die Person eine zeitliche Begrenzung einstellen kann.

Zusätzlich wird vorgeschlagen, dass ein von der abgebildeten Person erteiltes Nutzungsrecht an der die bildliche Darstellung der Person umfassenden digitalen Mediendatei mittels Blockchain-Technologie oder mittels DLT-Technologie registriert und/oder gesichert wird. Dadurch kann vorteilhaft ein manipulationssicherer Nachweis eines erteilten Nutzungsrechts, welches vorzugsweise unwiderruflich oder zeitlich begrenzt in einem Tangle der DLT-Technologie und/oder in einer Blockchain der Blockchain-Technologie, ermöglicht werden. Vorteilhaft können dadurch ein Missbrauch und/oder Betrug verhindert sowie eine Rechtssicherheit erhöht werden. Insbesondere wird zudem ein Zeitpunkt einer Erteilung des Nutzungsrechts, eine Zeitspanne des Nutzungsrechts, eine Höhe einer entrichteten Nutzungsgebühr, ein eindeutiger Identifikator der digitalen Mediendatei, der Benutzer-Identifikator des die Aufzeichnung vornehmenden Benutzers und/oder eines Nutzungsrecht-Inhabers, ein Identifikator der abgebildeten Person und/oder der das Nutzungsrecht erteilenden Person und/oder die das Nutzungsrecht betreffende digitale Mediendatei mittels Blockchain-Technologie oder mittels DLT-Technologie registriert und/oder gesichert.

Ferner wird ein Verfahren zu einer, insbesondere zumindest im Wesentlichen fälschungssicheren und dezentralisierten, Distribution von digitalen Mediendateien, welchen mittels des zuvor beschriebenen Verfahrens Metadaten zugeordnet sind, vorgeschlagen, wobei die digitalen Mediendateien und/oder zumindest die Metadaten der digitalen Mediendateien durch die Blockchain-Technologie oder durch die DLT-Technologie, vorzugsweise durch die DLT-Technologie mit der DAG oder der TDAG-Architektur, registriert und/oder verschlüsselt sind, wobei bei einer Nutzung der digitalen Mediendatei, beispielsweise bei einem Zugriff auf die digitale Mediendatei oder bei einem Versenden der digitalen Mediendatei, die Benutzer-Identität oder der Benutzer-Identifikator des Urhebers der digitalen Mediendatei aus den Metadaten der digitalen Mediendatei ausgelesen wird und dadurch von dem identifizierten Urheber festgelegte Nutzungsbedingungen ermittelt werden, wobei die Nutzung, insbesondere der Zugriff und/oder das Versenden, der digitalen Mediendatei in Abhängigkeit von den festgelegten Nutzungsbedingungen zugelassen oder verhindert wird. Dadurch kann eine vorteilhafte Kontrolle über ein Versenden, Teilen und/oder Verwenden von urheberrechtlich geschützten digitalen Mediendateien erlangt werden. Vorteilhaft kann ein unautorisiertes Versenden, Teilen und/oder Verwenden von urheberrechtlich geschützten digitalen Mediendateien verhindert werden. Vorteilhaft kann eine legale Distribution und/oder eine Lizenzierung und/oder ein legaler Verkauf von Rechten an digitalen Mediendateien von digitalen Mediendateien ohne eine zwischengeschaltete Instanz, wie beispielsweise eine Bildagentur, vorzugsweise direkt von Urheber zu Endnutzer, ermöglicht werden. Dadurch können vorteilhaft durch die zwischengeschaltete Instanz erzeugte Rechenkapazitäten, Kosten und/oder Zeitverzögerungen eliminiert werden.

Unter einer "dezentralisierten Distribution" soll insbesondere eine Distribution verstanden werden, welche frei von der zwischengeschalteten Instanz, wie beispielsweise der Bildagentur, ist und vorzugsweise direkt von einem Urheber und/oder Inhaber zu einem Nutzer erfolgt. Beispielsweise ist denkbar, dass die Distribution direkt von dem Aufnahmegerät des Urhebers aus erfolgt. Dazu wird insbesondere dem Nutzer über eine Internetverbindung ein Zugriff auf das Aufnahmegerät, vorzugsweise auf Vorschauen von auf dem Aufnahmegerät abgespeicherten digitalen Mediendateien, gewährt. Vorzugsweise kann der Nutzer dann eine oder mehrere digitale Mediendateien auf dem Aufnahmegerät anfordern und nach Erfüllung der Nutzungsbedingungen, beispielsweise nach einer Freigabe einer Währungstransaktion, insbesondere einer Kryptowährungstransaktion und/oder einem Micropayment, beispielsweise einer Bitcoin-, Etherium- oder IOTA^{™}-Transaktion, die digitale Mediendatei von dem Aufnahmegerät herunterladen. Insbesondere wird dem Nutzer erlaubt, die digitalen Mediendateien auf dem Aufnahmegerät zu filtern und/oder mittels einer Suchfunktion zu durchforsten.

Wenn die Nutzungsbedingungen zumindest eine, insbesondere von dem Urheber der digitalen Mediendatei, einem Inhaber der digitalen Mediendatei und/oder einer zentralen oder dezentralen Distributionsplattform, festgelegte Nutzungsgebühr umfassen, kann vorteilhaft ein besonders einfaches, Zeit, Kosten und/oder Arbeitsaufwand sparendes Entlohnungssystem für Urheber digitaler Mediendateien geschaffen werden. Insbesondere ist die Nutzungsgebühr ein Zahlbetrag in einer Fiatwährung, in einer Kryptowährung, wie beispielsweise Bitcoin, Etherium-Coin, IOTA, vorzugsweise mit einer Micro-Payment-Funktion. Eine dezentrale Distributionsplattform kann beispielsweise eine von einem einzelnen Urheber oder von einer Gruppe von Urhebern betriebene Plattform sein, auf der die digitalen Mediendateien angeboten werden, beispielsweise eine Internetseite oder auch nur ein für einen öffentlichen Zugriff oder für ein öffentliches Durchsuchen freigeschaltetes Aufnahmegerät.

Zudem wird vorgeschlagen, dass bei der Nutzung der digitalen Mediendatei eine Benutzer-Identität oder ein Benutzer-Identifikator eines Nutzers ermittelt wird und automatisch die festgelegte Nutzungsgebühr von dem Nutzer angefragt und/oder eingezogen und/oder an den Urheber, den Inhaber oder die Distributionsplattform übermittelt wird. Dadurch kann vorteilhaft ein Rechenressourcen, Zeit und/oder Energieaufwand sparendes Entlohnungssystem für Urheber von digitalen Mediendateien geschaffen werden. Vorteilhaft kann eine hohe Nutzerfreundlichkeit erreicht werden. Alternativ ist denkbar, dass die Nutzungsbedingung, beispielsweise die Nutzungsgebühr, vorab festgelegt wird und dadurch vorteilhaft nicht bei jeder Nutzung und/oder bei jedem Versenden einer digitalen Mediendatei separat abgefragt wird oder werden muss.

Es wird zudem vorgeschlagen, dass ein Versenden der digitalen Mediendatei mittels einer Social Media-Plattform, wie beispielsweise Facebook^{™}, oder mittels einer Chat-Plattform, wie beispielsweise WhatsApp^{™}, eine Nutzung der digitalen Mediendatei darstellt. Dadurch kann vorteilhaft ein legales Teilen urheberrechtlich geschützter digitaler Mediendateien gewährleistet werden. Insbesondere wird bei jedem Versenden oder Teilen von digitalen Mediendateien von der Social Media-Plattform oder von der Chat-Plattform die Metadatei der digitalen Mediendatei ausgelesen und dadurch ermittelt, ob die Nutzungsbedingungen das Teilen oder Versenden gestatten, wobei insbesondere gegebenenfalls zur Freigabe des Teilens und/oder des Versendens eine Nutzungsgebühr an den Urheber und/oder Inhaber übermittelt wird. Zudem wäre denkbar, dass die Social Media-Plattform oder die Chat-Plattform eine Beschränkung erlaubter digitaler Mediendateien nur auf solche einführen, welche urheberrechtlich identifizierbare digitale Mediendateien sind. Dadurch kann eine Verbreitung digitaler Mediendateien mit illegalem Inhalt vorteilhaft unterbunden werden und/oder ist leichter polizeilich ermittelbar (beispielsweise durch eine richterliche Verfügung zur Offenlegung der wahren Benutzer-Identität). Außerdem stellt insbesondere auch eine Lizenzierung oder ein Verkauf von Rechten an einer digitalen Mediendatei eine Nutzung dar. Es ist zudem denkbar, dass ein Rechteübergang an einer digitalen Mediendatei in der Blockchain oder in dem Distributed Ledger in Zusammenhang mit der digitalen Mediendatei registriert wird.

Außerdem wird ein Aufnahmegerät mit einer Computer-Funktionalität mit der Anwendungssoftware, welche zumindest zu einer Durchführung des Verfahrens zur Zuordnung eines Urhebers zu einer digitalen Mediendatei vorgesehen ist, vorgeschlagen. Insbesondere ist das Aufnahmegerät mit der Computer-Funktionalität als eine Digitalkamera, als ein Smartphone mit einer Digitalkamera oder als ein Personal Computer mit einer Digitalkamera, beispielsweise ein Tablet, ausgebildet. Dadurch kann insbesondere eine vorteilhafte Urheberidentifizierung ermöglicht werden.

Zusätzlich wird ein Anzeigegerät mit einer Computer-Funktionalität mit einer Anwendungssoftware, welche zumindest zu einer Durchführung des Verfahrens zu einer Distribution von digitalen Mediendateien vorgesehen ist, vorgeschlagen. Insbesondere ist das Anzeigegerät mit der Computer-Funktionalität als ein Smartphone mit einem Bildschirm oder als ein Personal Computer mit einem Bildschirm ausgebildet. Es ist denkbar, dass bei der dezentralen Distribution eine direkte Verbindung zwischen dem Anzeigegerät und dem Aufnahmegerät hergestellt wird. Vorteilhaft kann eine legale Distribution und/oder eine Lizenzierung von digitalen Mediendateien und/oder ein legaler Verkauf von Rechten an digitalen Mediendateien ohne eine zwischengeschaltete Instanz, wie beispielsweise eine Bildagentur, vorzugsweise direkt von Urheber zu Endnutzer, ermöglicht werden. Dadurch können vorteilhaft durch die zwischengeschaltete Instanz erzeugte Rechenkapazitäten, Kosten und/oder Zeitverzögerungen eliminiert werden.

Die erfindungsgemäßen Verfahren, das erfindungsgemäße Aufnahmegerät und das erfindungsgemäße Anzeigegerät sollen hierbei nicht auf die oben beschriebene Anwendung und Ausführungsform beschränkt sein. Insbesondere kann das erfindungsgemäße Verfahren, das erfindungsgemäße Aufnahmegerät und das erfindungsgemäße Anzeigegerät zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1a: eine schematische Darstellung eines ersten Aufnahmegeräts zu einer Aufzeichnung einer digitalen Mediendatei in einer Frontansicht,
- Fig. 1b: eine schematische Darstellung des ersten Aufnahmegeräts in einer Seitenansicht,
- Fig. 1c: eine schematische Darstellung des ersten Aufnahmegeräts in einer Rückansicht,
- Fig. 2a: eine schematische Darstellung eines zweiten Aufnahmegeräts zu einer Aufzeichnung einer digitalen Mediendatei in einer Frontansicht,
- Fig. 2b: eine schematische Darstellung des zweiten Aufnahmegeräts in einer Seitenansicht,
- Fig. 2c: eine schematische Darstellung des zweiten Aufnahmegeräts in einer Rückansicht,
- Fig. 3: eine schematische Darstellung einer durch das Aufnahmegerät aufgezeichneten digitalen Mediendatei,
- Fig. 4: ein schematisches Ablaufdiagramm eines Verfahrens zu einer Zuordnung zumindest eines Urhebers zu der digitalen Mediendatei,
- Fig. 5: ein schematisches Ablaufdiagramm eines Verfahrens zu einer Distribution von digitalen Mediendateien, welchen mittels des in der Fig. 4 gezeigten Verfahrens ein Urheber zugeordnet ist,
- Fig. 6: eine schematische Darstellung eines Anzeigegeräts zu einer Nutzung einer mittels des in der Fig. 5 gezeigten Verfahrens erworbenen digitalen Mediendatei in einer Frontansicht und
- Fig. 7: eine schematische Darstellung eines weiteren Anzeigegeräts mit einer beispielhaften Nutzungsrecht-Anfrage.

### Beschreibung der Ausführungsbeispiele

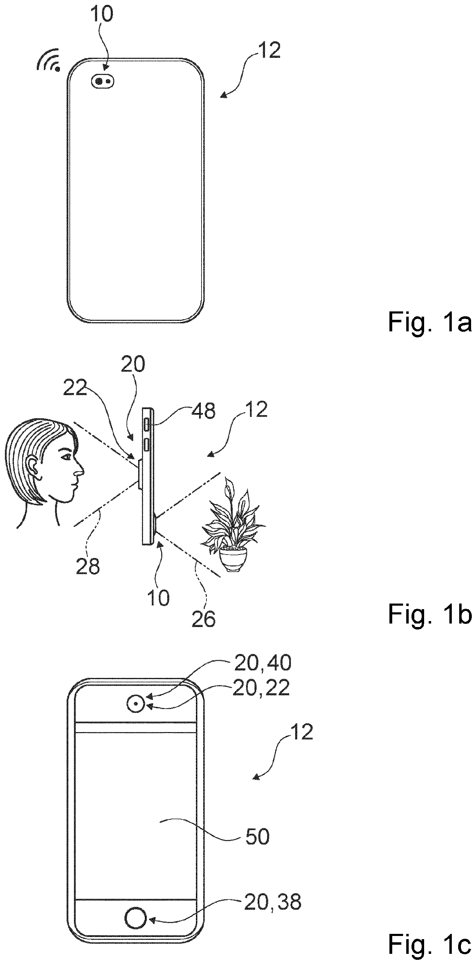

Die Figuren 1a bis 1c zeigen ein erstes beispielhaftes Aufnahmegerät 12. Das Aufnahmegerät 12 ist als ein Smartphone ausgebildet. Das Aufnahmegerät 12 weist eine Computer-Funktionalität auf. Das Aufnahmegerät 12 weist eine Prozessoreinheit (nicht gezeigt) und eine Speichereinheit (nicht gezeigt) auf. Auf der Speichereinheit des Aufnahmegeräts 12 ist eine Anwendungssoftware (App) abgespeichert, welche u.a. mittels der Prozessoreinheit und eines Betriebssystems des Aufnahmegeräts 12 von dem Aufnahmegerät 12 ausgeführt werden kann. Insbesondere ist die App bereits im Auslieferungszustand auf dem Aufnahmegerät 12 vorinstalliert. Alternativ kann die App zu einem späteren Zeitpunkt auf dem Aufnahmegerät 12 installiert werden. Das Aufnahmegerät 12, insbesondere die Anwendungssoftware, ist zumindest zu einer Durchführung eines, insbesondere im Folgenden beschriebenen, Verfahrens zu einer Zuordnung zumindest eines Urhebers zu einer digitalen Mediendatei 24 vorgesehen.

Das Aufnahmegerät 12 weist eine Aufzeichnungsvorrichtung 10 auf. Das Aufnahmegerät 12 und/oder die Aufzeichnungsvorrichtung 10 ist dazu vorgesehen, eine digitale Mediendatei 24 aufzuzeichnen. Die digitale Mediendatei 24 kann in dem dargestellten Fall ein Video oder ein Bild sein. Die Aufzeichnungsvorrichtung 10 ist als eine Frontkamera des Smartphones ausgebildet. Das Aufnahmegerät 12 weist eine Kamera 22 auf. Die Kamera 22 ist als eine Rückkamera ausgebildet. Das Aufnahmegerät 12 weist eine Sicherheitseinrichtung 20 auf. Die Sicherheitseinrichtung 20 ist zumindest zu einer Ermittlung und/oder einer Überprüfung eines Benutzer-Identifikators 54 vorgesehen, wobei der Benutzer-Identifikator 54 pseudonymisiert oder de-identifiziert sein kann. Alternativ oder zusätzlich kann die Sicherheitseinrichtung 20 zu einer direkten Ermittlung und/oder Überprüfung einer Benutzer-Identität vorgesehen sein.

Die Sicherheitseinrichtung 20 umfasst die Kamera 22. Die Kamera 22 ist zu der Ermittlung und/oder einer Überprüfung eines Benutzer-Identifikators 54 und/oder der Benutzer-Identität vorgesehen. Die Sicherheitseinrichtung 20, insbesondere die Kamera 22 ist zu einer Gesichtserkennung und/oder zu einer Gesichtsmerkmalerkennung vorgesehen. Die App ist zu einer Verarbeitung eines Bildes der Kamera 22 zum Zweck einer Gesichtserkennung und/oder einer Gesichtsmerkmalerkennung vorgesehen. Die Sicherheitseinrichtung 20, insbesondere die Kamera 22, ist zur Ermittlung und/oder Überprüfung des Benutzer-Identifikators 54 des eine Aufzeichnung einer digitalen Mediendatei 24 vornehmenden Benutzers vorgesehen. Ein Blickfeld 26 der als Frontkamera ausgebildeten Aufzeichnungsvorrichtung 10 und ein Blickfeld 28 der Kamera 22 sind in zumindest im Wesentlichen gegenläufige Richtungen ausgerichtet (vgl. Fig. 1b). Die Gesichtserkennung bildet eine erste Stufe einer Benutzererkennung aus.

Die Sicherheitseinrichtung 20 umfasst einen Fingerabdruckscanner 38 (vgl. Fig. 1c). Der Fingerabdruckscanner 38 ist in dem Aufnahmegerät 12 integriert. Der Fingerabdruckscanner 38 kann in einen Bildschirm 50 des Aufnahmegeräts 12, insbesondere des Smartphones, integriert sein. Der Fingerabdruckscanner 38 ist dazu vorgesehen, einen charakteristischen Fingerabdruck des Benutzers zur Ermittlung und/oder Überprüfung des Benutzer-Identifikators 54 zu erfassen. Die App ist zu einer Verarbeitung eines von dem Fingerabdruckscanner 38 erfassten Fingerabdrucks zum Zweck einer Ermittlung und/oder Überprüfung des Benutzer-Identifikators 54 des eine Aufzeichnung einer digitalen Mediendatei 24 vornehmenden Benutzers vorgesehen. Die Fingerabdruckerkennung bildet eine weitere (zweite) Stufe der Benutzererkennung aus.

Die Sicherheitseinrichtung 20 umfasst ein Mikrofon 48 (vgl. Fig. 1b). Das Mikrofon 48 ist in das Aufnahmegerät 12 integriert. Das Mikrofon 48 ist dazu vorgesehen, eine Stimmcharakteristik des Benutzers zur Ermittlung und/oder Überprüfung des Benutzer-Identifikators 54 zu erfassen. Die App ist zu einer Verarbeitung einer von dem Mikrofon 48 erfassten Stimme zum Zweck einer Ermittlung und/oder Überprüfung des Benutzer-Identifikators 54 des eine Aufzeichnung einer digitalen Mediendatei 24 vornehmenden Benutzers vorgesehen. Die Stimmerkennung bildet eine weitere (dritte) Stufe der Benutzererkennung aus.

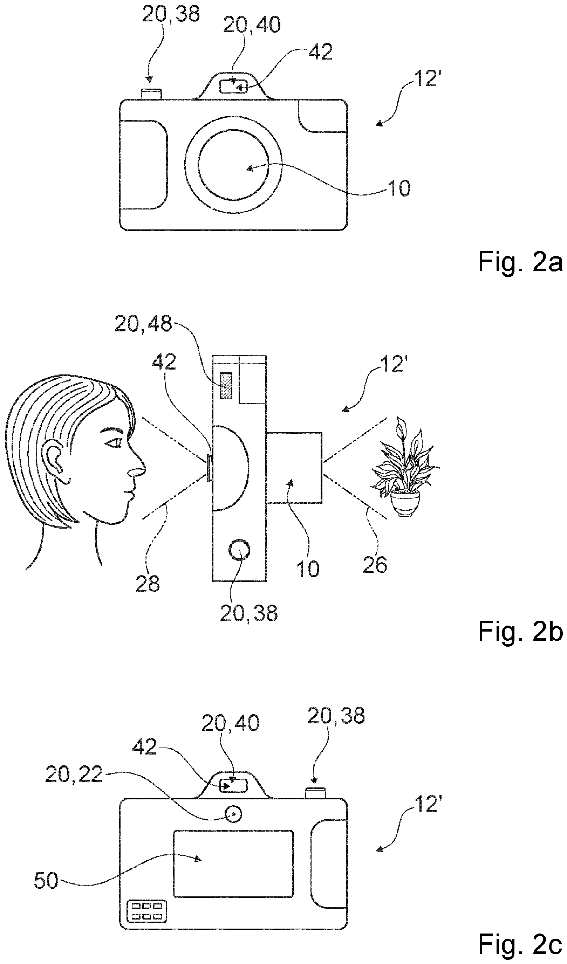

Die Figuren 2a bis 2c zeigen ein zweites beispielhaftes Aufnahmegerät 12'. Das Aufnahmegerät 12' ist als eine Digitalkamera ausgebildet. Das Aufnahmegerät 12' weist eine Computer-Funktionalität auf. Das Aufnahmegerät 12' weist eine Prozessoreinheit (nicht gezeigt) und eine Speichereinheit (nicht gezeigt) auf. Auf der Speichereinheit des Aufnahmegeräts 12 ist die App abgespeichert, welche u.a. mittels der Prozessoreinheit und eines Betriebssystems des Aufnahmegeräts 12' von dem Aufnahmegerät 12' ausführbar ist. Das zweite beispielhafte Aufnahmegerät 12' und das erste beispielhafte Aufnahmegerät 12 weisen im Wesentlichen übereinstimmende Funktionalitäten auf (siehe Fig. 2a und 2b). Die Sicherheitseinrichtung 20 umfasst einen Irisscanner 40. Der Irisscanner 40 ist in das Aufnahmegerät 12' integriert. Der Irisscanner 40 ist dazu vorgesehen, ein charakteristisches Irismuster des Benutzers zur Ermittlung und/oder Überprüfung des Benutzer-Identifikators 54 zu erfassen. Die App ist zu einer Verarbeitung eines von dem Irisscanner 40 erfassten Irismusters zum Zweck einer Ermittlung und/oder Überprüfung des Benutzer-Identifikators 54 des eine Aufzeichnung einer digitalen Mediendatei 24 vornehmenden Benutzers vorgesehen. Die Iriserkennung bildet eine weitere (vierte) Stufe der Benutzererkennung aus. Das als Digitalkamera ausgebildete Aufnahmegerät 12' weist einen Sucher 42 auf. Der Irisscanner 40 ist in den Sucher 42 integriert. Es ist denkbar, dass auch das als Smartphone ausgebildete Aufnahmegerät 12 einen Sucher 42 aufweist, in den ein Irisscanner 40 integriert ist.

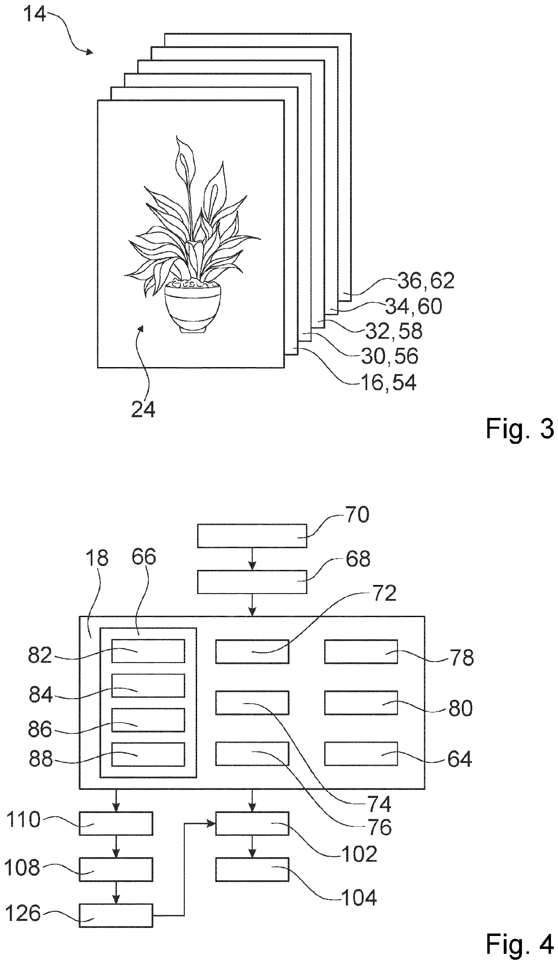

Fig. 3 zeigt eine schematische Darstellung der digitalen Mediendatei 24. Die digitale Mediendatei 24 ist als ein Digitalfoto ausgebildet. Die digitale Mediendatei 24 umfasst schematisch dargestellte Metadaten 14. Die Metadaten 14 umfassen Urheberinformationen 16, 30, 32, 34, 36. Zumindest eine der Urheberinformationen 16 ist der Benutzer-Identifikator 54 des die Aufzeichnung erstellenden Benutzers, d.h. des Urhebers der digitalen Mediendatei 24. Zumindest eine weitere der Urheberinformationen 30 ist ein Zeitstempel 56, beispielsweise ein Blockchain-Zeitstempel oder ein Digital Ledger Technology (DLT)-Zeitstempel, des Zeitpunkts der Aufzeichnung der digitalen Mediendatei 24. Zumindest eine der Urheberinformationen 32 ist ein Anwendungssoftware-Identifikator 58 der Anwendungssoftware, welche die Aufzeichnung ermöglicht und/oder welche die Zuordnung der Metadaten 14 zu der digitalen Mediendatei 24 vornimmt. Zumindest eine der Urheberinformationen 34 ist ein Hardware-Identifikator 60 des Aufnahmegeräts 12. Zumindest eine der Urheberinformationen 36 ist ein Aufnahmeort-Identifikator 62 eines Orts der Aufzeichnung der digitalen Mediendatei 24.

Fig. 4 zeigt ein schematisches Ablaufdiagramm eines Verfahrens zu einer, insbesondere zumindest im Wesentlichen fälschungssicheren, Zuordnung zumindest eines Urhebers zu der digitalen Mediendatei 24. In zumindest einem Verfahrensschritt 70 wird eine eindeutige Identifizierung eines Benutzers des Aufnahmegeräts 12 mit der Anwendungssoftware zur Ausführung des hierin beschriebenen Verfahrens mittels eines Know-Your-Customer Verfahrens, insbesondere einer Legitimationsprüfung, durchgeführt. Die legitimierte Benutzer-Identität wird daraufhin in der Anwendungssoftware als Benutzer-Identität oder als Benutzer-Identifikator 54 abgelegt. In zumindest einem weiteren Verfahrensschritt 68 wird die Benutzer-Identität oder der Benutzer-Identifikator 54 pseudonymisiert oder de-identifiziert. Dafür kann beispielsweise eine IOTA^{™}-ID verwendet werden. Dadurch kann vorteilhaft sichergestellt werden, dass der Benutzer-Identifikator 54 unveränderlich ist und/oder dass die wahre (legitimierte) Benutzer-Identität des Benutzers nicht öffentlich preisgegeben wird. Die wahre (legitimierte) Benutzer-Identität kann zu einer Erhöhung des Datenschutzes vorteilhaft zentral oder dezentral und verschlüsselt von einem Betreiber der Anwendungssoftware oder von einer externen Institution, wie beispielsweise der IOTA^{™}-Stiftung, verwahrt werden. Vorteilhaft kann dadurch sichergestellt werden, dass ein Zugriff auf die wahre (legitimierte) Benutzer-Identität des Benutzers nur mit Zustimmung des Benutzers möglich ist.

In zumindest einem weiteren Verfahrensschritt 18 wird die digitale Mediendatei 24 aufgezeichnet. Die digitale Mediendatei 24 wird von dem Aufnahmegerät 12 aufgezeichnet. Die digitale Mediendatei 24 wird von der Aufzeichnungsvorrichtung 10 des Aufnahmegeräts 12 aufgezeichnet. Die digitale Mediendatei 24 wird von der Frontkamera des Aufnahmegeräts 12 aufgezeichnet. Die Aufzeichnung der digitalen Mediendatei 24 wird von dem Benutzer gestartet und/oder ausgelöst, beispielweise durch einen Druck auf einen Touchscreen eines Smartphones oder einen Auslöser einer Digitalkamera. In zumindest einem Teilverfahrensschritt 66 des Verfahrensschritts 18 wird der Benutzer-Identifikator 54 ermittelt und/oder überprüft. In einem Unterverfahrensschritt 82 des Teilverfahrensschritts 66 wird der Benutzer-Identifikator 54 durch die Sicherheitseinrichtung 20 ermittelt und/oder überprüft. In dem Teilverfahrensschritt 66 wird die Ermittlung und/oder Überprüfung des Benutzer-Identifikators 54 des die Aufzeichnung vornehmenden Benutzers mittels der Kamera 22 des Aufnahmegeräts 12, insbesondere vollautomatisch, in dem Zeitraum der Aufzeichnung der digitalen Mediendatei 24 durchgeführt. Zur Ermittlung und/oder Überprüfung des Benutzer-Identifikators 54 des die Aufzeichnung vornehmenden Benutzers wird anhand von durch die Kamera 22 aufgezeichneten Bildern eine Gesichtserkennung und/oder eine Gesichtsmerkmalerkennung durchgeführt. In einem weiteren, insbesondere optionalen Unterverfahrensschritt 84 des Teilverfahrensschritts 66 wird von dem Fingerabdruckscanner 38 ein Fingerabdruck des Benutzers erfasst. In dem Unterverfahrensschritt 84 wird zur Ermittlung und/oder Überprüfung des Benutzer-Identifikators 54 des die Aufzeichnung vornehmenden Benutzers zusätzlich der Fingerabdruck des Benutzers erfasst und/oder analysiert. Die Erfassung und/oder Analyse des Fingerabdrucks wird im Zeitraum der Aufzeichnung der digitalen Mediendatei 24 vorgenommen. Der Unterverfahrensschritt 84 stellt eine zweite, insbesondere optionale, Sicherheitsstufe der Sicherheitseinrichtung 20 dar. In einem weiteren, insbesondere optionalen, Unterverfahrensschritt 86 des Teilverfahrensschritts 66 wird von dem Irisscanner 40 ein charakteristisches Irismuster des Benutzers erfasst. In dem Unterverfahrensschritt 86 wird zur Ermittlung und/oder Überprüfung des Benutzer-Identifikators 54 des die Aufzeichnung vornehmenden Benutzers zusätzlich das charakteristische Irismuster des Benutzers erfasst und/oder analysiert. Die Erfassung und/oder Analyse des charakteristischen Irismusters wird im Zeitraum der Aufzeichnung der digitalen Mediendatei 24 vorgenommen. Der Unterverfahrensschritt 86 stellt eine dritte, insbesondere optionale, Sicherheitsstufe der Sicherheitseinrichtung 20 dar. In einem weiteren, insbesondere optionalen, Unterverfahrensschritt 88 des Teilverfahrensschritts 66 wird von dem Mikrofon 48 eine Stimmcharakteristik des Benutzers erfasst. In dem Unterverfahrensschritt 88 wird zur Ermittlung und/oder Überprüfung des Benutzer-Identifikators 54 des die Aufzeichnung vornehmenden Benutzers zusätzlich die Stimmcharakteristik des Benutzers erfasst und/oder analysiert. Die Erfassung und/oder Analyse der Stimmcharakteristik wird im Zeitraum der Aufzeichnung der digitalen Mediendatei 24 vorgenommen. Der Unterverfahrensschritt 88 stellt eine vierte, insbesondere optionale, Sicherheitsstufe der Sicherheitseinrichtung 20 dar.

In zumindest einem weiteren Teilverfahrensschritt 72 des Verfahrensschritts 18 wird der Zeitstempel 56, insbesondere der Blockchain-Zeitstempel oder der Digital Ledger Technology (DLT)-Zeitstempel, erstellt. In dem Teilverfahrensschritt 72 wird der Zeitstempel 56, insbesondere der Blockchain-Zeitstempel oder der Digital Ledger Technology (DLT)-Zeitstempel, durch die Anwendungssoftware auf Basis einer Internetzeit oder einer Systemzeit des Aufnahmegeräts 12 erstellt. In dem Teilverfahrensschritt 72 wird die Erstellung des Zeitstempels 56, insbesondere des Blockchain-Zeitstempels oder des Digital Ledger Technology (DLT)-Zeitstempels, insbesondere vollautomatisch, in dem Zeitraum der Aufzeichnung der digitalen Mediendatei 24 durchgeführt. In zumindest einem weiteren Teilverfahrensschritt 74 des Verfahrensschritts 18 wird der Anwendungssoftware-Identifikator 58 erstellt. In dem Teilverfahrensschritt 74 wird der Anwendungssoftware-Identifikator 58 aus der Anwendungssoftware ausgelesen. In dem Teilverfahrensschritt 74 wird die Erstellung des Anwendungssoftware-Identifikators 58, insbesondere vollautomatisch, in dem Zeitraum der Aufzeichnung der digitalen Mediendatei 24 durchgeführt. In zumindest einem weiteren Teilverfahrensschritt 76 des Verfahrensschritts 18 wird der Hardware-Identifikator 60 erstellt. In dem Teilverfahrensschritt 76 wird der Hardware-Identifikator 60 aus dem Aufnahmegerät 12 ausgelesen. In dem Teilverfahrensschritt 76 wird die Erstellung des Hardware-Identifikators 60, insbesondere vollautomatisch, in dem Zeitraum der Aufzeichnung der digitalen Mediendatei 24 durchgeführt. Wenn der Anwendungssoftware-Identifikator 58 und/oder der Hardware-Identifikator 60 als eine zertifikatsbasierte IOTA^{™}-ID ausgebildet sind, kann vorteilhaft eine fälschungssichere und insbesondere nicht angemessen hackbare Identifizierung der verwendeten Anwendungssoftware und/oder des verwendeten Aufnahmegeräts 12 ermöglicht werden. In zumindest einem weiteren Teilverfahrensschritt 78 des Verfahrensschritts 18 wird der Aufnahmeort-Identifikator 62 erstellt. In dem Teilverfahrensschritt 78 wird der Aufnahmeort-Identifikator 62 aus einer Navigationsvorrichtung (nicht gezeigt) des Aufnahmegeräts 12 ausgelesen. In dem Teilverfahrensschritt 78 wird die Erstellung des Aufnahmeort-Identifikators 62, insbesondere vollautomatisch, in dem Zeitraum der Aufzeichnung der digitalen Mediendatei 24 durchgeführt.

In zumindest einem weiteren Teilverfahrensschritt 80 des Verfahrensschritts 18 werden die Urheberinformationen 16, 30, 32, 34, 36, insbesondere der Zeitstempel 56, der pseudonymisierte oder de-identifizierte Benutzer-Identifikator 54, der Anwendungssoftware-Identifikator 58, der Hardware-Identifikator 60 und/oder der Aufnahmeort-Identifikator 62, mittels Blockchain-Technologie oder mittels DLT-Technologie verschlüsselt und/oder gesichert.

In den Teilverfahrensschritten 66, 72, 74, 76, 78 des Verfahrensschritts 18 werden die Urheberinformationen 16, 30, 32, 34, 36 automatisch im Zeitraum der Aufzeichnung der digitalen Mediendatei 24 erstellt. Die Urheberinformationen 16, 30, 32, 34, 36 werden dabei von dem Aufnahmegerät 12, vorzugsweise von einer Anwendungssoftware des Aufnahmegeräts 12, erstellt. In zumindest einem weiteren Teilverfahrensschritt 64 des Verfahrensschritts 18 wird die digitale Mediendatei 24 mit den Metadaten 14 versehen. In dem Teilverfahrensschritt 64 werden die Metadaten 14 zusammen mit der digitalen Mediendatei 24 und/oder als integraler Teil der digitalen Mediendatei 24, insbesondere in der Speichereinheit des Aufnahmegeräts 12, abgespeichert.

In zumindest einem weiteren Verfahrensschritt 102 wird die digitale Mediendatei 24 zusammen mit den Metadaten 14 oder nur die Metadaten 14 der digitalen Mediendatei 24 mittels Blockchain-Technologie oder mittels DLT-Technologie registriert, verschlüsselt und/oder gesichert. In zumindest einem weiteren Verfahrensschritt 104 wird die durch die Blockchain-Technologie oder durch die DLT-Technologie gesicherte digitale Mediendatei 24 über eine Distributionsplattform öffentlich verfügbar gemacht.

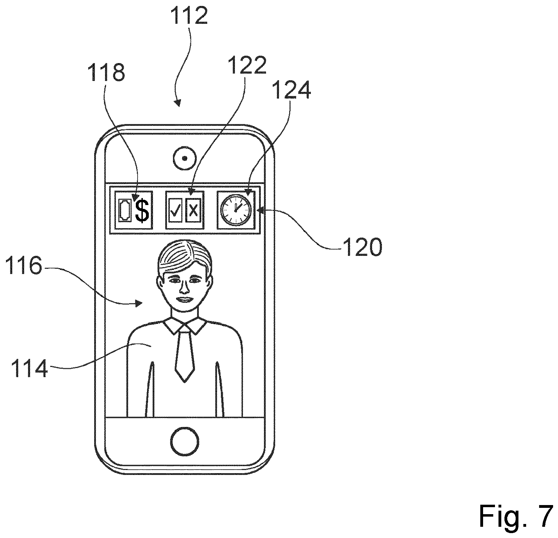

In dem Verfahrensschritt 18 kann eine digitale Mediendatei 24 aufgezeichnet werden, welche eine bildliche Darstellung 116 einer Person 114 (vgl. auch Fig. 7) umfasst. In einem Analyseschritt 110 wird die in dem Verfahrensschritt 18 aufgezeichnete digitale Mediendatei 24 auf Abbildungen von Personen 114 hin überprüft. In dem Analyseschritt 110 wird eine Bilderkennung der in der digitalen Mediendatei 24 enthaltenen Abbildung durchgeführt, welche dazu vorgesehen ist, ein Vorhandensein von Abbildern von Personen 114 zu erkennen. Bei einer Erkennung einer Abbildung einer Person 114 wird in dem Analyseschritt 110 eine Aufforderung zur Durchführung eines Autorisierungsschritts 108 ausgegeben. Der Autorisierungsschritt 108 folgt dem Verfahrensschritt 18 zeitlich nachfolgend.

In dem Autorisierungsschritt 108 wird, insbesondere in dem Fall, in dem die digitale Mediendatei 24 die bildliche Darstellung 116 der Person 114 umfasst, eine Nutzungsrecht-Anfrage 124 (siehe auch Fig. 7) an die in der bildlichen Darstellung 116 abgebildete Person 114 gesendet. Die Nutzungsrecht-Anfrage 124 umfasst eine Anfrage des Benutzers an die Person 114 zur (entgeltlichen oder unentgeltlichen) Übertragung eines Nutzungsrechts an der bildlichen Darstellung 116 der Person 114 (vgl. auch Fig. 7). Die Nutzungsrecht-Anfrage 124 umfasst ein Eingabefeld 118 für eine monetäre Forderung zur Erteilung des Nutzungsrechts, welche von der Person 114 an den anfragenden Benutzer zurückgeschickt wird. Das Nutzungsrecht an der die bildliche Darstellung 116 der Person 114 umfassenden digitalen Mediendatei 24 ist durch die abgebildete Person 114 im Rahmen des Autorisierungsschritts 108 zeitlich begrenzbar. Die Nutzungsrecht-Anfrage 124 umfasst ein Eingabefeld 120 für eine zeitliche Begrenzung der Erteilung des Nutzungsrechts, welche von der Person 114 an den anfragenden Benutzer zurückgeschickt wird. Die Nutzungsrecht-Anfrage 124 umfasst ein Eingabefeld 122 für eine Zustimmung der Erteilung des Nutzungsrechts und/oder für eine Ablehnung der Erteilung des Nutzungsrechts, welche von der Person 114 an den anfragenden Benutzer zurückgeschickt wird. Zudem wird in dem Autorisierungsschritt 108 die digitale Mediendatei 24 an ein Anzeigegerät 112 der abgebildeten Person 114 übermittelt. In zumindest einem weiteren Verfahrensschritt 126 wird das von der abgebildeten Person 114 erteilte Nutzungsrecht an der die bildliche Darstellung 116 der Person 114 umfassenden digitalen Mediendatei 24 mittels Blockchain-Technologie oder mittels DLT-Technologie registriert und/oder gesichert. In dem Verfahrensschritt 126 wird das Nutzungsrecht und/oder die Nutzungsrecht-Transaktion in eine Blockchain oder in ein Digital Ledger eingetragen.

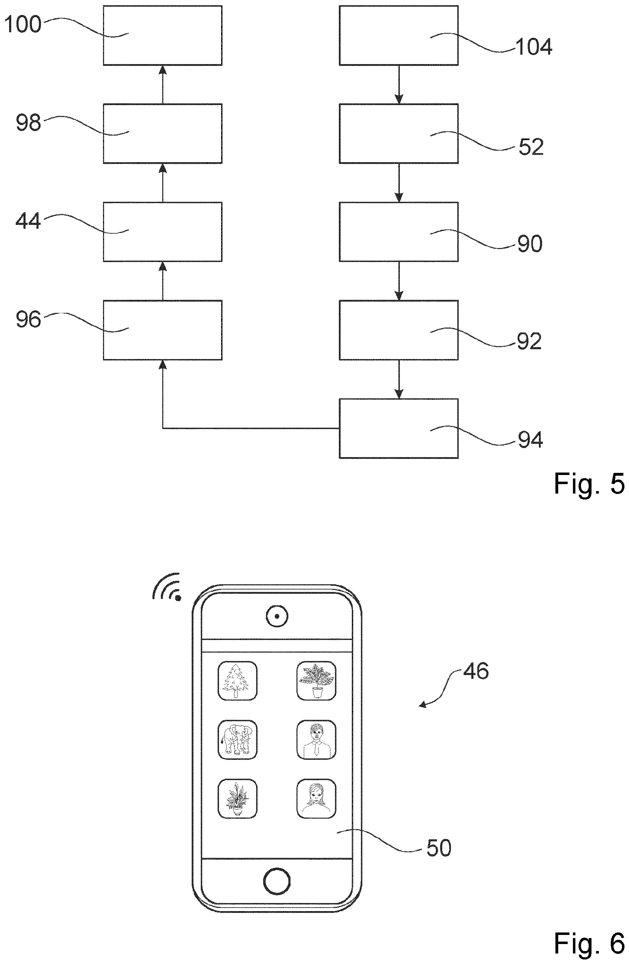

Fig. 5 zeigt ein schematisches Ablaufdiagramm eines Verfahrens zu einer, insbesondere fälschungssicheren und vorzugsweise dezentralisierten, Distribution von digitalen Mediendateien 24, welchen mittels des in der Fig. 4 gezeigten Verfahrens Metadaten 14 zugeordnet sind, wobei die digitalen Mediendateien 24 und/oder zumindest die Metadaten 14 der digitalen Mediendateien 24 durch eine Blockchain-Technologie oder durch eine Digital Ledger Technologie (DLT) registriert und/oder verschlüsselt sind. In zumindest einem Verfahrensschritt 52 wird die digitale Mediendatei 24 für eine Distribution freigegeben. Dazu kann beispielsweise die digitale Mediendatei 24 oder eine Vorschau der digitalen Mediendatei 24 auf einem Mediendatei-Marktplatz (z.B. einem IOTA^{™}-Mediendaten-Marktplatz), auf einer privaten Webseite oder auf einer weiteren öffentlich zugänglichen Plattform angeboten werden. Alternativ oder zusätzlich ist denkbar, dass die digitale Mediendatei 24 durch die Freigabe zur Distribution von einer spezialisierten Suchmaschine (z.B. einer IOTA^{™}-Mediendaten-Suchmaschine) auffindbar gemacht wird. Dabei kann die digitale Mediendatei 24 auf dem lokalen Aufnahmegerät 12 verbleiben (von dem es dann bei Erwerb direkt heruntergeladen werden kann) oder an die öffentliche Plattform zur von dort ausgehenden Distribution übertragen werden. Eine Vorschau wird mit reduzierter Auflösung oder mit einem Wasserzeichen o.ä. dargestellt. Bei jedem Transfer bleiben die Metadaten 14 und damit die Urheberinformationen 16, 30, 32, 34, 36 untrennbar mit der digitalen Mediendatei 24 verbunden.

In zumindest einem weiteren Verfahrensschritt 90 wird die digitale Mediendatei 24 von einem Nutzer für eine Nutzung angefragt. In zumindest einem weiteren Verfahrensschritt 92 wird bei einer Nutzung der digitalen Mediendatei 24, beispielsweise bei einem Zugriff auf die digitale Mediendatei 24 oder bei einem Versenden der digitalen Mediendatei 24 durch den Nutzer die Benutzer-Identität oder der Benutzer-Identifikator 54 des Urhebers der digitalen Mediendatei 24 aus den Metadaten 14 der digitalen Mediendatei 24 ausgelesen. In zumindest einem weiteren Verfahrensschritt 94 wird aus den ausgelesenen Metadaten 14 eine von dem identifizierten Urheber festgelegte Nutzungsbedingung ermittelt. Die Nutzungsbedingungen umfassen zumindest eine, insbesondere von dem Urheber der digitalen Mediendatei 24, von einem Inhaber der digitalen Mediendatei 24 und/oder von einer zentralen oder dezentralen Distributionsplattform und/oder der spezialisierten Suchmaschine festgelegte Nutzungsgebühr. In zumindest einem weiteren Verfahrensschritt 96 wird die Nutzung, insbesondere der Zugriff und/oder das Versenden, der digitalen Mediendatei 24 in Abhängigkeit von den festgelegten Nutzungsbedingungen zugelassen oder verhindert. Dabei ist denkbar, dass ein Zugriff, insbesondere abhängig von den Nutzungsbedingungen, beschränkt, z.B. zeitlich beschränkt, nutzungsanzahlbeschränkt oder nutzungsumfangsbeschränkt wird.

In zumindest einem weiteren Verfahrensschritt 44 wird bei der Nutzung der digitalen Mediendatei 24 eine Benutzer-Identität oder ein Benutzer-Identifikator 54 eines Nutzers ermittelt und automatisch die festgelegte Nutzungsgebühr von dem Nutzer angefragt und/oder eingezogen und/oder, vorzugsweise direkt, an den Urheber, den Inhaber, die Distributionsplattform oder die spezialisierte Suchmaschine übermittelt. Dabei wird die Nutzungsgebühr von einem, vorzugsweise mit der Distributionsplattform oder der spezialisierten Suchmaschine verknüpften, Konto eingezogen. Das Konto kann dabei als ein Kryptowährungskonto, insbesondere ein Crypto-Wallet, ausgebildet sein. Die Distributionsplattform und/oder die spezialisierte Suchmaschine kann als eine Applikationssoftware auf einem Smartphone ausgebildet sein. In zumindest einem weiteren Verfahrensschritt 98 wird die digitale Mediendatei 24 mittels einer Social Media-Plattform oder mittels einer Chat-Plattform versendet. Das Versenden der digitalen Mediendatei 24 mittels der Social Media-Plattform oder mittels der Chat-Plattform stellt eine Nutzung der digitalen Mediendatei 24 dar, welche eine Einhaltung der festgelegten Nutzungsbedingungen, beispielsweise eine Entrichtung der Nutzungsgebühr erfordert. Die Nutzungsgebühr kann eine Mikrozahlung für ein Versenden der digitalen Mediendatei 24 mittels der Social Media-Plattform oder mittels der Chat-Plattform festlegen, d.h. insbesondere eine Zahlung im Bereich eines Bruchteils eines Eurocents. Insbesondere ist denkbar, dass eine Nutzung der digitalen Mediendatei 24, insbesondere ein Versenden der digitalen Mediendatei 24 mittels der Social Media-Plattform oder mittels der Chat-Plattform nur zugelassen wird, wenn eine Erlaubnis zum automatischen Einzug der Nutzungsgebühr von dem Nutzer vorliegt. In zumindest einem weiteren Verfahrensschritt 100 erkennt die Social Media-Plattform oder die Chat-Plattform automatisch eine durch das Verfahren von Fig. 4 geschützte digitale Mediendatei 24 und blockiert ein Teilen und/oder Versenden, solange keine Zustimmung zur Entrichtung der Nutzungsgebühr erteilt wird. Dadurch kann sich ein Betreiber der Social Media-Plattform oder der Chat-Plattform vorteilhaft dagegen schützen, dass Urheberrechtsverletzungen auf der Social Media-Plattform oder der Chat-Plattform begangen werden.

Fig. 6 zeigt ein weiteres beispielhaftes Anzeigegerät 46 mit einer Computer-Funktionalität. Das Anzeigegerät 46 ist als ein Smartphone ausgebildet. Das Anzeigegerät 46 weist eine, insbesondere vorinstallierte Anwendungssoftware auf, welche zumindest zu einer Durchführung des in der Fig. 5 gezeigten Verfahrens zu einer Distribution von digitalen Mediendateien 24 vorgesehen ist. Die Anwendungssoftware des Anzeigegeräts 46 kann die Distributionsplattform, die spezialisierte Suchmaschine, die Social Media-Plattform und/oder die Chat-Plattform umfassen.

Eine beispielhafte Anwendung könnte wie folgt aussehen. Ein Nutzer, beispielsweise eine Zeitung, möchte über ein bestimmtes Ereignis, beispielsweise eine Demonstration oder ein Konzert, berichten. Bei dem Ereignis vor Ort erstellen zu einem bestimmten Zeitpunkt diverse Urheber digitale Mediendateien 24, z.B. Bilder oder Videos, insbesondere mittels verschiedener Aufnahmegeräte 12. Der Nutzer kennt Ort und Zeit des Ereignisses und lässt sich zum Zeitpunkt des Ereignisses die aktuell bereits zur Verfügung stehenden digitalen Mediendateien 24 anzeigen. Dazu aktiviert der Nutzer sein Anzeigegerät 46 und öffnet die Anwendungssoftware, beispielsweise die spezialisierte Suchmaschine. Über Standort und Zeitfilter durchsucht der Nutzer die verfügbaren digitalen Mediendateien 24. Diese könnten sogar nahezu Echtzeitaufnahmen sein. Wenn der Nutzer fündig wird, fragt er/sie die gewünschte digitale Mediendatei 24 an. Dadurch werden die Nutzungsbedingungen und ggf. die Nutzungsgebühr ermittelt. Nach Freigabe der Zahlung der Nutzungsgebühr durch den Nutzer wird die digitale Mediendatei 24 direkt von dem Urheber, insbesondere direkt von dem Aufnahmegerät 12 des Urhebers, an den Nutzer übertragen, welcher dadurch vorteilhaft hochaktuelle digitale Mediendaten 24 über das Ereignis erhält. In dem Verfahren zur Distribution von digitalen Mediendateien 24 kann vorteilhaft die digitale Mediendatei 24 direkt von dem Urheber, insbesondere dem Aufnahmegerät 12 des Urhebers, zu dem Nutzer, insbesondere dem Anzeigegerät 46 des Nutzers, übertragen werden. In dem Verfahren zur Distribution von digitalen Mediendateien 24 kann vorteilhaft eine Zahlung der Nutzungsgebühr direkt von dem Nutzer an den Urheber erfolgen. Es ist denkbar, dass der Betreiber der Anwendungssoftware einen Prozentsatz der Nutzungsgebühr als Vermittlungs- und/oder Urheberrechtschutzgebühr einbehält.

Die Fig. 7 zeigt beispielhaft das Anzeigegerät 112 der Person 114 in einem Anzeigezustand, in dem die Nutzungsrecht-Anfrage 124 angezeigt wird.

### Bezugszeichen

- 10: Aufzeichnungsvorrichtung
- 12: Aufnahmegerät
- 14: Metadaten
- 16: Urheberinformation
- 18: Verfahrensschritt
- 20: Sicherheitseinrichtung
- 22: Kamera
- 24: digitale Mediendatei
- 26: Blickfeld
- 28: Blickfeld
- 30: weitere Urheberinformation
- 32: weitere Urheberinformation
- 34: weitere Urheberinformation
- 36: weitere Urheberinformation
- 38: Fingerabdruckscanner
- 40: Irisscanner
- 42: Sucher
- 44: Verfahrensschritt
- 46: Anzeigegerät
- 48: Mikrofon
- 50: Bildschirm
- 52: Verfahrensschritt
- 54: Benutzer-Identifikator
- 56: Zeitstempel
- 58: Anwendungssoftware-Identifikator
- 60: Hardware-Identifikator
- 62: Aufnahmeort-Identifikator
- 64: Teilverfahrensschritt
- 66: Teilverfahrensschritt
- 68: Verfahrensschritt
- 70: Verfahrensschritt
- 72: Teilverfahrensschritt
- 74: Teilverfahrensschritt
- 76: Teilverfahrensschritt
- 78: Teilverfahrensschritt
- 80: Teilverfahrensschritt
- 82: Unterverfahrensschritt
- 84: Unterverfahrensschritt
- 86: Unterverfahrensschritt
- 88: Unterverfahrensschritt
- 90: Verfahrensschritt
- 92: Verfahrensschritt
- 94: Verfahrensschritt
- 96: Verfahrensschritt
- 98: Verfahrensschritt
- 100: Verfahrensschritt
- 102: Verfahrensschritt
- 104: Verfahrensschritt
- 108: Autorisierungsschritt
- 110: Analyseschritt
- 112: Anzeigegerät
- 114: Person
- 116: Bildliche Darstellung
- 118: Eingabefeld
- 120: Eingabefeld
- 122: Eingabefeld
- 124: Nutzungsrecht-Anfrage
- 126: Verfahrensschritt

## Patentansprüche

1. Verfahren zu einer Zuordnung zumindest eines Urhebers zu einer digitalen Mediendatei (24), mit zumindest einem Verfahrensschritt (18), in dem die digitale Mediendatei (24) mittels einer Aufzeichnungsvorrichtung (10) eines Aufnahmegeräts (12, 12'), insbesondere einer Frontkamera des Aufnahmegeräts (12, 12'), aufgezeichnet und mit Metadaten (14) versehen wird,
wobei die Metadaten (14) zumindest eine Urheberinformation (16) umfassen,
wobei die Urheberinformation (16) automatisch im Zeitraum der Aufzeichnung der digitalen Mediendatei (24), insbesondere von dem Aufnahmegerät (12, 12'), vorzugsweise von einer Anwendungssoftware des Aufnahmegeräts (12, 12'), erstellt wird,
wobei die Urheberinformation (16) als ein Benutzer-Identifikator (54) ausgebildet ist,
und wobei in dem Verfahrensschritt (18) zumindest der Benutzer-Identifikator (54), insbesondere zumindest eine Benutzer-Identität, durch eine Sicherheitseinrichtung (20) ermittelt und/oder überprüft wird, wobei die Sicherheitseinrichtung (20) eine Kamera (22) des Aufnahmegeräts (12, 12'), insbesondere eine Rückkamera des Aufnahmegeräts (12, 12'), umfasst, mittels welcher im Zeitraum der Aufzeichnung der digitalen Mediendatei (24) mittels der Aufzeichnungsvorrichtung (10) die Ermittlung und/oder Überprüfung des Benutzer-Identifikators (54), insbesondere der Benutzer-Identität, des die Aufzeichnung vornehmenden Benutzers durchgeführt wird,
**dadurch gekennzeichnet, dass**
in dem Verfahrensschritt (18) eine digitale Mediendatei (24) aufgezeichnet wird, welche eine bildliche Darstellung (116) einer Person (114) umfasst, und dass in zumindest einem Autorisierungsschritt (108) eine Nutzungsrecht-Anfrage (124) an die in der bildlichen Darstellung (116) abgebildete Person (114) gesendet wird.

2. Verfahren nach Anspruch 1, **dadurch gekennzeichnet, dass** in zumindest einem, insbesondere zwischen dem Verfahrensschritt (18) und dem Autorisierungsschritt (108) liegenden, Analyseschritt (110) die in dem Verfahrensschritt (18) aufgezeichnete digitale Mediendatei (24) auf Abbildungen von Personen hin überprüft wird.

3. Verfahren nach Anspruch 2, **dadurch gekennzeichnet, dass** bei einer Erkennung einer Abbildung einer Person (114) in dem Analyseschritt (110) eine Aufforderung zur Durchführung des Autorisierungsschritts (108) ausgegeben wird.

4. Verfahren nach einem der vorhergehenden Ansprüche, **dadurch gekennzeichnet, dass** in dem Autorisierungsschritt (108) die digitale Mediendatei (24) an ein Anzeigegerät (112) der abgebildeten Person (114) übermittelt wird.

5. Verfahren nach einem der vorhergehenden Ansprüche, **dadurch gekennzeichnet, dass** ein Nutzungsrecht an der die bildliche Darstellung (116) der Person (114) umfassenden digitalen Mediendatei (24) durch die abgebildete Person (114) im Rahmen des Autorisierungsschritts (108) zeitlich begrenzbar ist.

6. Verfahren nach einem der vorhergehenden Ansprüche, **dadurch gekennzeichnet, dass** ein von der abgebildeten Person (114) erteiltes Nutzungsrecht an der die bildliche Darstellung (116) der Person (114) umfassenden digitalen Mediendatei (24) mittels Blockchain-Technologie oder mittels DLT-Technologie registriert und/oder gesichert wird.

7. Verfahren nach einem der vorhergehenden Ansprüche, **dadurch gekennzeichnet, dass** von der Sicherheitseinrichtung (20) zumindest eine Gesichtserkennung und/oder eine Gesichtsmerkmalerkennung zur Ermittlung und/oder Überprüfung des Benutzer-Identifikators (54) des die Aufzeichnung vornehmenden Benutzers durchgeführt wird.

8. Verfahren nach einem der vorhergehenden Ansprüche, **dadurch gekennzeichnet, dass** die Aufzeichnungsvorrichtung (10) als eine Frontkamera des Aufnahmegeräts (12, 12') ausgebildet ist, wobei ein Blickfeld (26) der Frontkamera und ein Blickfeld (28) der Kamera (22) in zumindest im Wesentlichen gegenläufige Richtungen ausgerichtet sind oder ausrichtbar sind.

9. Verfahren nach einem der vorhergehenden Ansprüche, **dadurch gekennzeichnet, dass** die Sicherheitseinrichtung (20) einen Fingerabdruckscanner (38) umfasst, von dem im Zeitraum der Aufzeichnung der digitalen Mediendatei (24) zur Ermittlung und/oder Überprüfung des Benutzer-Identifikators (54) des die Aufzeichnung vornehmenden Benutzers zusätzlich ein Fingerabdruck des Benutzers erfasst und/oder analysiert wird.

10. Verfahren nach einem der vorhergehenden Ansprüche, **dadurch gekennzeichnet, dass** die Sicherheitseinrichtung (20) einen Irisscanner (40) umfasst, von dem im Zeitraum der Aufzeichnung der digitalen Mediendatei (24) zur Ermittlung und/oder Überprüfung des Benutzer-Identifikators (54) des die Aufzeichnung vornehmenden Benutzers zusätzlich ein charakteristisches Irismuster des Benutzers erfasst und/oder analysiert wird.

11. Verfahren nach Anspruch 10, **dadurch gekennzeichnet, dass** der Irisscanner (40) in einen Sucher (42) des Aufnahmegeräts (12, 12') integriert ist.

12. Verfahren nach einem der vorhergehenden Ansprüche, **dadurch gekennzeichnet, dass** die Sicherheitseinrichtung (20) ein Mikrofon (48) umfasst, von dem im Zeitraum der Aufzeichnung der digitalen Mediendatei (24) zur Ermittlung und/oder Überprüfung des Benutzer-Identifikators (54) des die Aufzeichnung vornehmenden Benutzers zusätzlich eine Stimmcharakteristik des Benutzers erfasst und/oder analysiert wird.

13. Aufnahmegerät (12, 12') mit einer Computer-Funktionalität, insbesondere Digitalkamera oder Smartphone oder Personal Computer mit einer Digitalkamera, mit einer Anwendungssoftware, welche zumindest zu einer Durchführung eines Verfahrens zu einer Zuordnung zumindest eines Urhebers zu einer digitalen Mediendatei (24) nach einem der Ansprüche 1 bis 12 vorgesehen ist.
